# EUROPEAN PATENT APPLICATION

(11) **EP 4 510 360 A1**
(43) Date of publication of application: **19.02.2025**
(21) Application number: 23306380.9
(22) Date of filing: 15.08.2023
(51) Int. Cl.: H01M 50/528, H01M 50/533, H01M 50/54

(54) **CURRENT COLLECTOR WITH TWO FOLD PORTIONS, BATTERY CELL SUBASSEMBLY AND METHOD OF MANUFACTURING THE SUBASSEMBLY**

(71) Applicant: Automotive Cells Company SE, 33520 Bruges (FR)
(72) Inventor: CHOI, Hangjune, 33200 Bordeaux (FR)
(74) Representative: Alatis

(57) **Abstract**

A current collector (10) for connecting a set of electrode tabs (14) to a terminal foot (52) of a battery cell subassembly (54), comprises a sheet metal piece with a tab connection wing (12), a terminal foot connection wing (14), a first fold portion (16) and a second fold portion (18) linking the tab connection wing (12) to the terminal foot connection wing (14) along a reference axis (100). The tab connection wing (12) comprises a tab connection portion (20), a first end portion (28), which links the tab connection portion (20) to the first fold portion (16) at a first axial end of the tab connection portion (20) and extends axially along the first fold portion (16). and a second end portion (32), which links the tab connection portion (20) to the second fold portion (18) at a second axial end of the tab connection portion (20) and extends axially along the second fold portion (18).

## Description

### TECHNICAL FIELD OF THE INVENTION

The present invention relates to a current collector for a subassembly of a battery cell, and more specifically to a current collector which, during the manufacturing process of the prismatic cell, is folded from an assembly shape to a folded shape.

### BACKGROUND ART

A current collector for a subassembly of a prismatic battery cell is known from US2021384513A1. The current collector consists of a L-shaped piece of sheet metal having a tab connection wing for welding the current collector to a set of electrode tabs of the subassembly, a terminal foot connection wing for welding the current collector to an electrode terminal foot of an electrode terminal of the prismatic battery cell, and a fold portion linking the tab connection wing to the terminal foot connection wing. The fold portion defines a fold axis. The tab connection wing comprises a tab connection portion and an end portion, which links the tab connection portion to the fold portion at an axial end of the tab connection portion and extends axially along the fold portion. The set of electrode tabs is welded to a face of the tab connection portion, opposite to the terminal foot connection wing and the terminal foot is connected to a face of the terminal connection wing opposed to the tab connection wing.

Thanks to the fold portion, it is possible to weld the set of electrode tabs to the tab connection portion of the tab connection wing and the terminal foot to the terminal foot connection wing while the tab connection wing is at a right angle relative to the terminal foot connection wing, in a position which gives room to the welding heads. After the welding operations have been completed, the current collector is folded so that the tab connection wing rotates towards the terminal foot connection wing about the fold axis to a folded shape of the current collector, in which the end portion of the tab connection wing at least partially covers the terminal foot connection wing and the tab connection wing is parallel or substantially parallel to the terminal foot connection wing. After folding is completed, the set of electrode tabs has to be bent to allow a side of the stack of electrodes, from which the set of electrode tabs protrudes, to face the tab connection wing.

Folding the current collector requires a force to be applied with a folding tool to the end portion of the tab connection wing with the tab connection portion being cantilevered. Hence, the movement of the tab connection portion is difficult to control during the folding operation, which means that undesirable stress is likely to be applied to the electrode tabs during folding. Moreover the fold itself may be irregular if the force applied is not properly centred.

Another issue with this design is that the final bending of the electrode tabs requires a sufficient spacing between the side of the stack of electrodes from which the electrode tabs protrude and the tab connection portion of the current collector. The design is therefore suboptimal in terms of compactness and energy density.

### SUMMARY OF THE INVENTION

The invention aims to provide a design of the current collector that addresses at least some of the drawbacks of the prior art.

According to a first aspect of the invention, there is provided a current collector for connecting a set of electrode tabs of a stack of electrodes to a terminal foot of a battery cell subassembly, in particular for a prismatic battery cell, the current collector comprising a sheet metal piece, the sheet metal piece defining a reference axis, the sheet metal piece having a tab connection wing, a terminal foot connection wing and a first fold portion linking the tab connection wing to the terminal foot connection wing, the first fold portion defining a first fold axis coaxial with the reference axis, the tab connection wing comprising a tab connection portion, a first end portion, which links the tab connection portion to the first fold portion at a first axial end of the tab connection portion and extends axially along the first fold portion. The sheet metal piece further comprises a second fold portion which links the tab connection wing to the terminal foot connection wing, the second fold portion defines a second fold axis coaxial with the reference axis, and the tab connection wing comprises a second end portion, which links the tab connection portion to the second fold portion at a second axial end of the tab connection portion and extends axially along the second fold portion.

The structure of the current collector assigns various portions of the tab connection wing to various functions: the tab connection portion is devoted to the connection with the set of electrode tabs while the first and second end portions are devoted to the application of force during folding. Thanks to the two fold portions at both axial ends of the tab connection portion, it is possible to apply forces symmetrically at both end portions of the tab connection wing, to allow a symmetrical folding operation.

The surface of the connection portion intended for welding or otherwise fixing the set of electrode tabs is preferably flat. Similarly, the surface of the foot terminal connection wing intended for welding or otherwise fixing the terminal foot is preferably flat and preferably turned away from the tab connection wing.

Throughout the specification, the terminal foot can be an integral part or region of a one-piece terminal or one part of a terminal made of several parts.

The current collector can be intended for either the positive or negative pole of the battery cell, and the metal used can vary. A positive electrode current collector is preferably made of aluminium, an aluminium alloy, or the like, while a negative electrode current collector is preferably made of copper, a copper alloy, or the like.

In one embodiment, the tab connection portion of the tab connection wing has two free edges, which are preferably rectilinear and extend in the axial direction from the first end portion to the second end portion of the tab connection wing, thus defining two free spaces outwards of each edge, which can advantageously be used as a passage for electrode tabs from one side of the tab connecting wing to the other. Hence, it is possible to weld or otherwise fix the set of electrode tabs to a side of the tab connection portion opposed to the stack of electrodes, such as to minimise a radius of curvature of the bent electrode tabs and to save the space for energy storage in a battery cell. In addition, these free edges can be working as guides for the tabs getting folded in a more precise shape which may enhance the quality of assembly.

In one embodiment, the terminal foot connection wing comprises a first end portion which extends axially along the first fold portion and a second end portion which extends axially along the second fold portion. The two end portions of the terminal foot connection wing can be each independently mechanically and electrically connected to a terminal foot of a battery cell terminal. In a preferred embodiment, however, the terminal foot connection wing comprises a bridge portion, which links the first end portion of the terminal foot connection wing and the second end portion of the terminal foot connection wing and spreads the electric current flow wider so that the current carrying capacity of the collector is increased. More freedom is given to connect the terminal foot mechanically and electrically, in particular to one and/or the other of the two end portions and/or to the bridge portion of the terminal foot connection wing. Advantageously, the bridge portion can be linked to the first end portion of the terminal foot connection wing by a first step of the terminal foot connection wing, and to the second end portion of the tab connection wing by a second step of the terminal foot connection wing, such that the bridge portion is recessed with respect to the first end portion of the terminal foot connection wing and to the second end portion of the terminal foot connection wing. This ensures that sufficient space is provided for the electrode tabs in the slot-shaped space once the current collector has been folded.

In one embodiment, each of the first and second fold portions is asymmetrical, in that it is flush with a flat surface of the respective one of the first and second end portions of the tab connection wing, but bulges out of a neighbouring portion of the terminal foot connection wing. This asymmetric shape is advantageous in that it enables to reach a final folded shape in which the first and second end portions of the tab connection wing are very close to the terminal connection wing, to maximise compacity without overstressing the material of the current collector at the fold. It also allows the use of a folding tool applied to flat surfaces of the first and second end portions of the tab connection wing and unimpeded by the fold portions, so that better control of the folding is achieved.

The dimensions of the tab connection portion are adapted to those of the intended electrode tabs. In one embodiment, the tab connection portion has a length measured along the reference axis, a width measured perpendicularly to the reference axis and the length is greater than the width, preferably at least twice as great as the width.

In one embodiment, the tab connection portion is linked to the first end portion of the tab connection wing by a first step of the tab connection wing, and to the second end portion of the tab connection wing by a second step of the tab connection wing, such that the tab connection portion is recessed with respect to the first end portion of the tab connection wing and to the second end portion of the tab connection wing. More space is provided for bending the electrode tabs when the side of the stack of electrodes from which the electrode tabs protrude is placed close to the tab connection wing of the current collector. In other words, the stack of electrodes can be placed closer to the current collector, to increase compactness and energy density.

The geometric features of the current collector discussed above can relate:
- to the current collector in an assembly shape, i.e. before the current collector has been folded and/or
- to the current collector in a final assembled shape, i.e. after the collector has been folded.

In one embodiment, the current collector is in an assembly state in which the tab connection wing is at an initial angle relative to the terminal foot connection wing, and the first- and second- fold portions are plastically foldable such as to allow the tab connection wing to rotate towards the terminal foot connection wing about the reference axis to a folded state of the current collector, in which the first end portion of the tab connection wing partially covers the terminal foot connection wing, the second end portion of the tab connection wing partially covers the terminal foot connection wing and the tab connection wing is parallel or substantially parallel to the terminal foot connection wing. The initial angle can be e.g. in the range of 60° to 120° and is preferably a right or obtuse angle, to provide an optimal access to the various areas of the current collector that are used to mechanically and electrically connect the set of electrode tabs and the foot terminal.

In one embodiment, the current collector is in a folded state in which the first end portion of the tab connection wing partially covers the terminal foot connection wing, the second end portion of the tab connection wing partially covers the terminal foot connection wing and the tab connection wing is parallel or substantially parallel to the terminal foot connection wing. In this context, "substantially parallel" means that the angle between the tab connection wing and the terminal foot connection wing is less than 5°.

To avoid excessive stress, the concave side of the fold portion has a radius of curvature, measured in a plane perpendicular to the fold axis at any point of the concave side, which is preferably greater than 2 mm.

According to another aspect of the invention, there is provided a subassembly for a battery cell, the subassembly comprising a stack of electrodes provided with at least a first set of electrode tabs protruding from a side of the stack of electrodes and a current collector as described above, wherein the first set of electrode tabs is mechanically and electrically connected to the tab connection portion of the tab connection wing of the current collector.

In one embodiment, the set of electrode tabs is welded to the tab connection wing.

In a preferred embodiment, the first set of electrode tabs is mechanically and electrically connected to a face of the tab connection wing opposite to the side of the stack of electrodes.

In one embodiment, the stack of electrodes is provided with a second set of electrode tabs protruding from the side of the stack of electrodes and mechanically and electrically connected to the tab connection portion of the tab connection wing of the current collector, preferably to a face of the tab connection portion opposite to the side of the stack of electrodes. The two sets of electrode tabs can advantageously surround the tab connection portion of the current collector.

The terminal foot connection wing is preferably welded to the terminal foot. In one embodiment, a terminal foot mechanically and electrically connected to the terminal foot connection wing of the current collector. The terminal foot can be mechanically and electrically connected to:
- a face of the terminal foot connection wing opposed to the tab connection wing; and/or
- at least one of the first and second end portions of the terminal foot connection wing; and/or
- the first and second end portions of the terminal foot connection wing;
   and/or
- the bridge portion of the terminal foot connection wing.

According to another aspect of the invention, there is provided a method of manufacturing the subassembly described above, comprising:
- providing a current collector according to any one of claims 8 or 9;
- connecting the set of electrode tabs of the subassembly to the tab connection wing;
- connecting the terminal foot connection wing of the subassembly to the terminal foot; and
- subsequently plastically folding the first fold portion and the second fold portion such as to rotate the tab connection wing towards the terminal foot connection wing about the reference axis to a folded state of the current collector, in which the first end portion of the tab connection wing partially covers the terminal foot connection wing, the second end portion of the tab connection wing partially covers the terminal foot connection wing and the tab connection wing is parallel or substantially parallel to the terminal foot connection wing.

The step of connecting the set of electrode tabs of the subassembly may include welding the set of electrode tabs to the tab connection wing. Similarly, the step of connecting the terminal foot of the subassembly may include welding the terminal foot connection wing to the terminal foot.

In one embodiment, the step of plastically folding the first fold portion and the second fold portion includes applying folding forces to the first and second end portions of the tab connection wing and to the terminal foot connection wing, preferably to the first and second end portions of the terminal foot connection wing.

To avoid excessive stress, the step of folding is carried out such that the folded shape of the current collector, the fold portion has a concave side, which faces a gap between the tab connection wing and the terminal foot connection wing, and the concave side of the fold portion has a radius of curvature, measured in a plane perpendicular to the fold axis at any point of the concave side, which is greater than 2 mm.

### BRIEF DESCRIPTION OF THE FIGURES

Other advantages and features of the invention will then become more clearly apparent from the following description of a specific embodiments of the invention given as non-restrictive examples only and represented in the accompanying drawings in which:
- Figure 1 is a schematic isometric view of a current collector according to one embodiment of the invention in an assembly shape;
- Figure 2 is a schematic side view of a subassembly for a battery cell according to one embodiment of the invention, including a set of tabs protruding from a stack of electrodes and a terminal foot welded to the current collector of Figure 1, in the assembly shape;
- Figure 3 is a schematic side view of the subassembly of Figure 2, after folding the current collector (with parts of the stack of electrodes removed);
- Figure 4 is a schematic cross-section of the subassembly in the shape of Figure 3 through a first fold portion of the current collector;
- Figure 5 is a schematic cross-section of the subassembly in the shape of Figure 3, through a tab connection portion of the current collector;
- Figure 6 is a schematic cross-section of the subassembly in the shape of Figure 3 through a second fold portion of the current collector.
- Figure 7 is a schematic side view of a subassembly for a battery cell according to another embodiment of the invention, including a set of tabs protruding from a stack of electrodes and a terminal foot welded to the current collector of Figure 1, in the assembly shape;
- Figure 8 is a schematic side view of the subassembly of Figure 7, after folding the current collector (with parts of the stack of electrodes removed);
- Figure 9 is a schematic cross-section of the subassembly in the shape of Figure 8, through a tab connection portion of the current collector.

Corresponding reference numerals refer to the same or corresponding parts in each of the Figures.

### DETAILED DESCRIPTION OF A PREFERRED EMBODIMENT

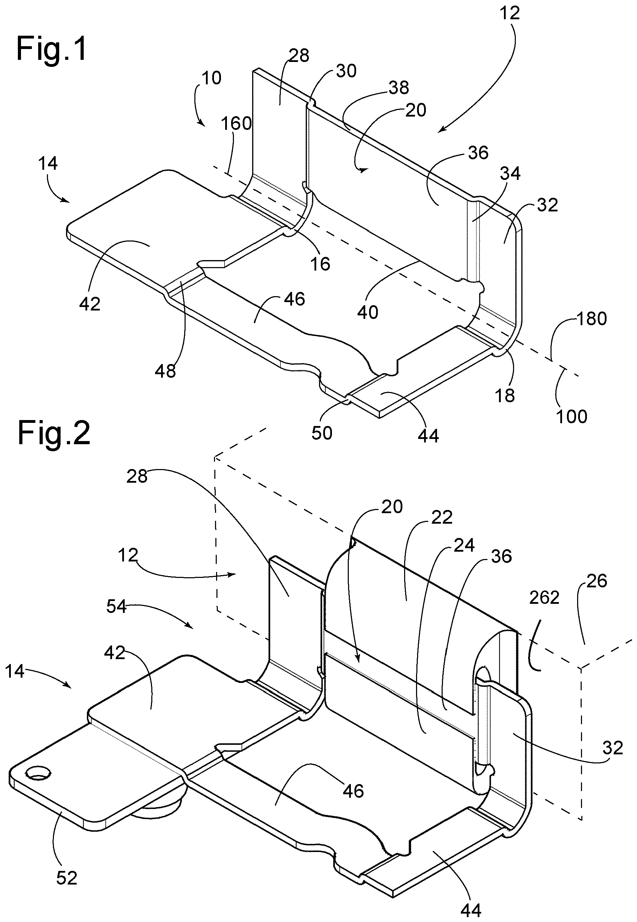

With reference to Figure **1****,** a current collector **10** consists of a sheet metal piece, with a tab connection wing **12** and a terminal foot connection wing **14** linked by a first fold portion **16** and a second fold portion **18.** The first fold portion **16** is plastically foldable about a first fold axis **160,** and the second fold portion **18** is plastically foldable about a second fold axis **180** coaxial with the first fold axis **160** and with a reference axis **100** of the current collector **10.**

The tab connection wing **12** includes a tab connection portion **20** for mechanically and electrically connecting the current collector **10** to at least one, and preferably two sets of electrode tabs **22, 24** of a stack of electrodes **26,** as illustrated in Figure **2****.** The tab connection portion **20** is linked to a first end portion **28** of the tab connection wing **12** by a first step **30** of the tab connection wing **12** at a first axial end of the tab connection portion **20.** The first end portion **28** extends axially along the first fold portion **16** and links the tab connection portion **20** to the first fold portion **16.** Similarly, the tab connection portion **20** is linked to a second end portion **32** of the tab connection wing **12** by a second step **34** of the tab connection wing **12.** The second end portion **32** extends axially along the second fold portion **18** and links the tab connection portion **20** to the second fold portion **18.** The length of the tab connection portion 20 is preferably at least twice as great as its width, and greater than or equal to a width of the sets of electrode tabs **22, 24,** measured along the reference axis **100.**

In an assembly state illustrated in Figure **1** and Figure **2****,** the one or two sets of electrode tabs **22, 24** protrude from a side **262** of the stack of electrodes **26** and can be mechanically and electrically connected to a surface **36** of the tab connection portion **20,** which is opposed to the side **262** of the stack of electrodes **26.** To this end, each set of electrode tabs **22, 24** is folded around a respective edge **38, 40** of the tab connection portion **20.**

The terminal foot connection wing **14** comprises a first end portion **42** which extends axially along the first fold portion **16,** a second end portion **44,** which extends axially along the second fold portion **18** and a bridge portion **46,** which links the first end portion **42** and the second end portion **44.** The bridge portion **46** is linked to the first end portion **44** of the terminal foot connection wing **14** by a first step **48** of the terminal foot connection wing **14,** and to the second end portion **46** of the tab connection wing **14** by a second step **50** of the terminal foot connection wing **14,** such that the bridge portion **46** is recessed with respect to the first end portion **42** of the terminal foot connection wing **14** and to the second end portion **44** of the terminal foot connection wing **14.** A terminal foot **52** of the battery cell can be mechanically and electrically connected to the terminal foot connection wing **14,** e.g. at the first end portion of the terminal foot connection wing **42** as illustrated in Figure **2****.**

In Figures **1** and **2****,** the current collector **10** is in an assembly state and has an assembly shape in which the tab connection wing **12** is at an initial angle, preferably a right or obtuse angle, relative to the terminal foot connection wing **14,** which provides easy access for mechanically and electrically connecting the set(s) of electrode tabs **22, 24** of the stack of electrodes **26** and the terminal foot **52,** to form a subassembly **54** of a prismatic battery cell illustrated in Figure **2****.**

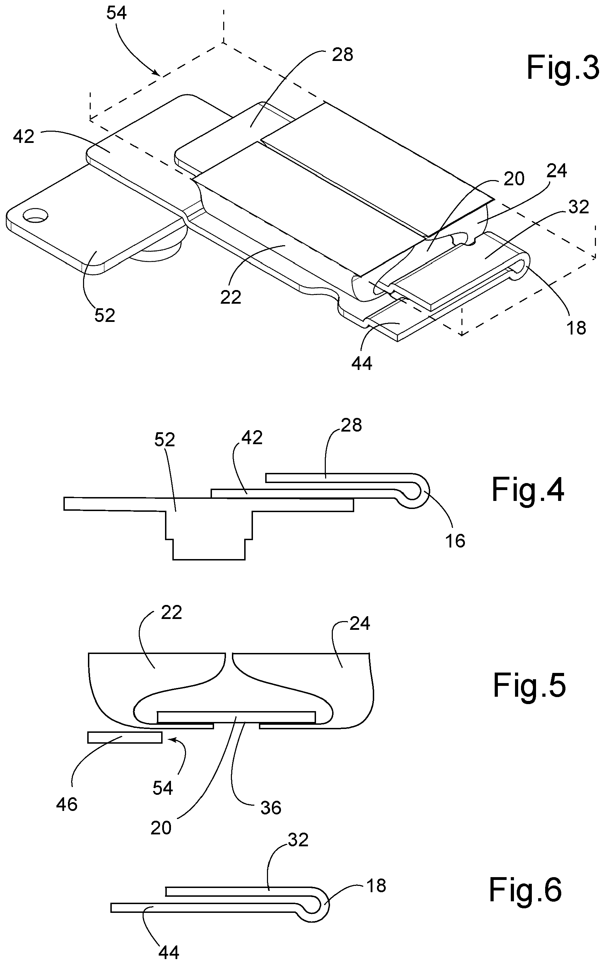

From the position illustrated in Figure **2****,** the first and second fold portions **16, 18** can be plastically folded to a folded state shown in Figures **3** to **6****.** More specifically, the tab connection wing **12** is allowed to rotate towards the terminal foot connection wing **14** about the reference axis **100** to the folded state of the current collector 10, in which the first end portion **28** of the tab connection wing **12** partially or fully covers the first end portion **42** of the terminal foot connection wing **14,** the second end portion **32** of the tab connection wing **12** partially or fully covers the second end portion **44** of the terminal foot connection wing **14** and the tab connection wing **12** is parallel or substantially parallel to the terminal foot connection wing **14.** A gap **54** is preserved between the tab connection wing **12** and the terminal foot connection wing **14,** and more specifically between the tab connection portion **20** and the bridge portion **46,** to accommodate the set of electrode tabs **22** (see Figure **5**).

The fold portions **16, 18** are aligned along the reference axis **100.** Each of the first and second fold portions **16, 18** is preferably asymmetrical, both in the assembly state and in the folded state, as illustrated in the Figures. More specifically, each of the first and second fold portions **16, 18** is flush with a flat surface of the respective one of the first and second end portions **38, 32** of the tab connection wing **12** but bulges out of the first and second end portions **42, 44** of the terminal foot connection wing. Thanks to this asymmetrical shape, it is easy, once the set of electrode tabs **22, 24** and the terminal foot **52** have been mechanically and electrically connected to the current collector **10,** to apply a tool to the end portions **28, 32** of the tab connection wing **12,** with a contact area that extends to the boundary with the first and second fold portions **16, 18** and to pivot the tool to apply the required pressure to plastically deform the first and second fold portions **16, 18** in a controlled manner, while the terminal foot is maintained.

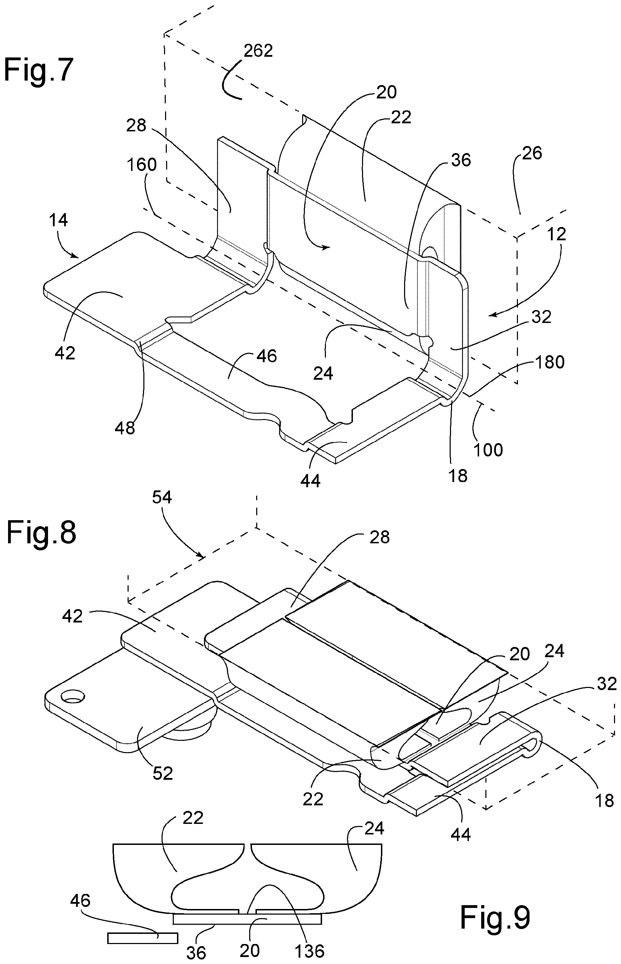

The embodiment of Figures **7** to **9** differs from the previous embodiment merely in that the one or two sets of electrode tabs **22, 24** are mechanically and electrically connected to a surface **136** of the tab connection portion **20,** which faces the side **262** of the stack of electrodes **26.**

Further embodiments include only one set of electrode tabs, which can be the set of electrode tabs **22** or the set of electrode tabs **24,** mechanically and electrically connected either to the surface **36** of the tab connection portion **20** which is opposed to the side **262** of the stack of electrodes **26,** as a variant of the embodiment of Figures **3** to **6****,** or to the surface **136** of the tab connection portion 20, which faces the side **262** of the stack of electrodes **26,** as a variant of the embodiment of Figures **7** to **9****.**

Still further embodiments include one set of electrode tabs **22** mechanically and electrically connected to one of surface **36** and surface **136** and another set of electrode tabs **24** mechanically and electrically connected to the other one of surface **36** and surface **136.** This layout may be favourable in terms of tab length and current collector width.

Throughout the description, the preferred means for mechanically and electrically connecting the one or two sets of electrode tabs **22, 24** to the current collector **12** is welding.

## Claims

1. A current collector (10) for connecting a set of electrode tabs (14) of a stack of electrodes (26) to a terminal foot (52) of a battery cell subassembly (54), the current collector (10) comprising a sheet metal piece, the sheet metal piece defining a reference axis (100), the sheet metal piece having a tab connection wing (12), a terminal foot connection wing (14) and a first fold portion (16) linking the tab connection wing (12) to the terminal foot connection wing (14), the first fold portion (16) defining a first fold axis (160) coaxial with the reference axis (100), the tab connection wing (12) comprising a tab connection portion (20), a first end portion (28), which links the tab connection portion (20) to the first fold portion (16) at a first axial end of the tab connection portion (20) and extends axially along the first fold portion (16),
**characterised in that** the sheet metal piece comprises a second fold portion (18) which links the tab connection wing (12) to the terminal foot connection wing (14), the second fold portion (18) defines a second fold axis (180) coaxial with the reference axis (100), and the tab connection wing (20) comprises a second end portion (32), which links the tab connection portion (20) to the second fold portion (18) at a second axial end of the tab connection portion (20) and extends axially along the second fold portion (18).

2. The current collector (10) of claim 1, wherein the tab connection portion (20) has two free edges (38, 40), which extend in along the reference axis (100) from the first end portion (28) of the tab connection wing (12) to the second end portion (32) of the tab connection wing (12).

3. The current collector (10) of any one of the preceding claims, wherein the terminal foot connection wing (14) comprises a first end portion (42) which extends axially along the first fold portion (16) and a second end portion (44), which extends axially along the second fold portion (18).

4. The current collector (10) of claim 3, wherein the terminal foot connection wing (14) comprises a bridge portion (46), which links the first end portion (42) of the terminal foot connection wing (14) and the second end portion (44) of the terminal foot connection wing (14), and wherein, preferably, the bridge portion (46) is linked to the first end portion (42) of the terminal foot connection wing (14) by a first step (48) of the terminal foot connection wing (14), and to the second end portion (44) of the tab connection wing (14) by a second step (50) of the terminal foot connection wing (14), such that the bridge portion (46) is recessed with respect to the first end portion (42) of the terminal foot connection wing (14) and to the second end portion (44) of the terminal foot connection wing (14).

5. The current collector (10) of any one of claims 3 to 4, each of the first and second fold portions (16, 18) is flush with a flat surface of the respective one of the first and second end portions (28, 32) of the tab connection wing (12), but bulges out of the respective one of the first and second end portions (42, 44) of the terminal foot connection wing (14).

6. The current collector (10) of any one of the preceding claims, wherein:
- the tab connection portion (20) has a length measured along the reference axis (100), a width measured perpendicularly to the reference axis (100) and the length is greater than the width, preferably at least twice as great as the width; and/or
- the tab connection portion (20) is linked to the first end portion (28) of the tab connection wing (12) by a first step (30) of the tab connection wing (12), and to the second end portion (32) of the tab connection wing (12) by a second step (34) of the tab connection wing (12), such that the tab connection portion (20) is recessed with respect to the first end portion (28) of the tab connection wing (12) and to the second end portion (32) of the tab connection wing (12).

7. The current collector (10) of any one of the preceding claims, wherein the current collector (10) is in an assembly state in which the tab connection wing (12) is at an initial angle relative to the terminal foot connection wing (14), and the first and second fold portions (16, 18) are plastically foldable such as to allow the tab connection wing (12) to rotate towards the terminal foot connection wing (14) about the reference axis (100) to a folded state of the current collector (10), in which the first end portion (28) of the tab connection wing (12) partially covers the terminal foot connection wing (14), the second end portion (32) of the tab connection wing (12) partially covers the terminal foot connection wing (14) and the tab connection wing (12) is parallel or substantially parallel to the terminal foot connection wing (14).

8. The current collector (10) of claim 7, wherein the initial angle is a right or obtuse angle.

9. The current collector (10) of any one of claims 1 to 6, wherein the current collector (10) is in a folded state in which the first end portion (28) of the tab connection wing (12) partially covers the terminal foot connection wing (14), the second end portion (32) of the tab connection wing (12) partially covers the terminal foot connection wing (14) and the tab connection wing (12) is parallel or substantially parallel to the terminal foot connection wing (14).

10. A subassembly (54) for a battery cell, the subassembly (54) comprising a stack of electrodes (26) provided with at least a first set of electrode tabs (22) protruding from a side (262) of the stack of electrodes (26) and a current collector (10) according to one of the preceding claims, wherein the first set of electrode tabs (22) is mechanically and electrically connected to the tab connection portion (20) of the tab connection wing (20) of the current collector (10).

11. The subassembly of claim 10, wherein the first set of electrode tabs (22) is mechanically and electrically connected to a face (36) of the tab connection wing (12) opposite to the side (262) of the stack of electrodes (26) or to a face of the tab connection wing (12) facing the side (262) of the stack of electrodes (26).

12. The subassembly of any one of claims 10 to 11, wherein the stack of electrodes (26) is provided with a second set of electrode tabs (24) protruding from the side (262) of the stack of electrodes (26) and mechanically and electrically connected to the tab connection portion (20) of the tab connection wing (20) of the current collector (10), preferably to a face (36) of the tab connection portion opposite to the side (262) of the stack of electrodes (26) or to a face of the tab connection wing (12) facing the side (262) of the stack of electrodes (26).

13. The subassembly (54) of any one of claims 10 to 12, further comprising a terminal foot (52) mechanically and electrically connected to the terminal foot connection wing (14) of the current collector (10), preferably to a face of the terminal foot connection wing (14) opposed to the tab connection wing (12).

14. A method of manufacturing the subassembly (54) of any one of claims 10 to 13, comprising:
- providing a current collector (10) according to any one of claims 8 or 9;
- connecting the set of electrode tabs (14, 16) of the subassembly (10) to the tab connection wing (12);
- connecting the terminal foot (14, 16) of the subassembly (10) to the terminal foot connection wing (14); and
- subsequently plastically folding the first fold portion (16) and the second fold portion (18) such as to rotate the tab connection wing (12) towards the terminal foot connection wing (14) about the reference axis (100) to a folded state of the current collector (10), in which the first end portion (28) of the tab connection wing (12) partially covers the terminal foot connection wing (14), the second end portion (32) of the tab connection wing (12) partially covers the terminal foot connection wing (14) and the tab connection wing (12) is parallel or substantially parallel to the terminal foot connection wing (14).

15. The method of claim 14, wherein plastically folding the first fold portion (16) and the second fold portion (18) includes applying folding forces to the first end portion (28) of the tab connection wing (12) and the second end portion (32) of the tab connection wing (12) and to the terminal foot connection wing (14).
